(19) Europäisches Patentamt / European Patent Office / Office européen des brevets

(11) **EP 3 786 850 A1**

(12) **EUROPEAN PATENT APPLICATION**

(43) Date of publication:
**03.03.2021 Bulletin 2021/09**

(51) Int Cl.:
**G06N 3/04** *(2006.01)*      **G06N 3/08** *(2006.01)*
**G10H 7/00** *(2006.01)*      **G10H 1/02** *(2006.01)*

(21) Application number: **19194633.4**

(22) Date of filing: **30.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Native Instruments GmbH**
**10997 Berlin (DE)**

(72) Inventor: **Parker, Julian**
**10997 Berlin (DE)**

(74) Representative: **Gulde & Partner**
**Patent- und Rechtsanwaltskanzlei mbB**
**Wallstraße 58/59**
**10179 Berlin (DE)**

(54) **METHOD OF EMULATING A SIGNAL PROCESSING MEANS USING A NEURAL NETWORK SYSTEM, METHOD OF PROCESSING A SIGNAL, AN EMULATED SIGNAL PROCESSING MEANS AND A SIGNAL PROCESSING UNIT**

(57) In accordance with one aspect of the present invention there is provided a method of emulating a signal processing means comprising the steps of obtaining sampled data at discrete time steps n of output signal values $y_n$ as outputted by a signal processing means to be emulated, and at least one internal state signal values $x_n$ of an internal state of the signal processing means to be emulated. Further, the step of training a neural network system on a processor unit with a set of training data is provided, wherein the neural network system has an input layer, at least one hidden layer and an output layer, the set of training data comprising the at least one internal state signal values $x_n$ for all time steps n, an input to the neural network system the values of the at least one internal state signal values $x_n$ at time step n, and an output of the neural network system is a value representative of the at least one internal state signal value $x_{n+1}$ of the signal processing means at time step n+1, and the output signal values $y_n$ of the signal processing means. Further provided is the step of storing the parameters of the trained neural network system on a storage unit.

In addition, a method of processing a signal employing an emulated signal processing means, an emulated signal processing means and a signal processing unit are provided.

Fig. 3

EP 3 786 850 A1

**Description**

FIELD OF INVENTION

The present invention relates generally to a method of emulating a signal processing means using a neural network system, a method of processing a signal using an emulated signal processing means, an emulated signal processing means and a signal processing unit comprising at least one emulated signal processing means.

BACKGROUND OF THE INVENTION

Machine learning, particularly using deep learning of neural networks, is used to perform a wide range of tasks based on training mathematical models to data. As these machine learning structures, algorithms, and related methods can achieve complex tasks without relying on explicit instructions by a human programmer, they are considered a form of artificial intelligence.

Virtual analogue modelling in digital signal processing such as generation and processing of audio signals is a well-established yet specialized field, concerned with reproducing the behaviour of an original analogue system in digital form. For the purpose of application context, virtual analogue modelling is a suitable subset of digital signal processing to demonstrate the use of the proposed invention.

In some prior art, virtual analogue modelling relies on an engineer's understanding of an electrical or electro-mechanical system to derive equations and convert these equations into code as explicit instructions. There are various approaches for how these explicit models are structured and processing methods are optimized. These methods require a large amount of manual labour and expertise related to both the modelling technique and the individual original system.

DE 102015110938 A1 and US 2016328501 A1 disclose automated methods which require less manual labour and individual knowledge of the original system, but are restricted to modelling a limited class of original systems to a limited level of accuracy.

In recent academic prior art by E. Damskagg, L. Juvela, E. Thuillier and V. Valimaki, "Deep Learning for Tube Amplifier Emulation," 2019 IEEE International Conference on Acoustics, Speech and Signal Processing (ICASSP), Brighton, United Kingdom, 2019, pp. 471-475, highly generalised machine learning methods such as Convolutional Neural Networks have been applied to model the input to output behaviour of an original system, without any consideration or knowledge of the internal mechanics of the original system. Such systems are computationally expensive and depending on the original system can be prohibitively difficult to train using iterative machine learning.

For typical applications in real-time processing, a continuous stream of discrete audio data is put through such a process with only milliseconds of latency between input and output, creating high requirements for performance, i.e. computational efficiency, of any virtual analogue processor.

There is a constant development effort in the field of virtual analogue modelling to improve digital signal processing methods in the areas of computational efficiency, achievable original system complexity, and ability to model highly non-linear or autonomous behaviours. In creating such solutions on a commercial scale, prior art is not able to fulfil the above criteria with reasonable investment of manual effort for many original systems of interest.

SUMMARY OF THE INVENTION

An object of the invention is to improve on the prior art of digital signal processing methods in using machine learning for a new data structure and computational method, providing processing at higher fidelity in reproducing an original system, with lower requirements on the processing and also reduced manual effort for creating individual models for different original systems.

In accordance with one aspect of the present invention there is provided a method of emulating a signal processing means which comprising the steps of:

obtaining sampled data at discrete time steps n of:

output signal values as outputted by a signal processing means to be emulated, and
at least one internal state signal values of an internal state of the signal processing means to be emulated;

training a neural network system on a processor unit with a set of training data, the training data being the obtained sampled data of the signal processing means to be emulated, wherein the neural network system comprises an input layer, at least one hidden layer, and an output layer, wherein an input to the neural network system during training is provided by the value of the at least one internal state signal values at time step n, and an output of the neural network system is: in case the output signal of the signal processing means is equal to one of the at least one internal state signal: a value representative of the at least one internal state signal value of the signal processing means at time step n+1, in all other cases: a value representative of the at least one internal state signal value of the signal processing means at time step n+1, and the output signal values of the signal processing means; and
storing the parameters of the trained neural network system on a storage unit.

This present invention presents a new method comprising a neural network structure, embedded within a discrete-time state-space system. This structure can be trained to approximate the behaviour of a number of signal processing means using not just input and output measurements, but also measurements of sampled quantities within the signal processing means.

The state space or phase-space description of a dynamical system is well-known in the art. It is a mathematical geometrical space describing all possible configurations of states of a dynamical system, which is a mathematical system wherein a function describes the evolution of a point in an abstract geometrical space. The state dynamics is a function defining the evolution of a set of states in time, or in discrete time steps via iteration.

The signal processing means to be emulated in this invention can be described in continuous time using a mathematical model of the form:

$$\dot{\mathbf{x}}(t) = f_a \begin{pmatrix} \mathbf{u}(t) \\ \mathbf{x}(t) \end{pmatrix}$$

where x are the states of the system, y are the outputs, u are the inputs, dx/dt is the time derivative of the states, and $f_a$ is a function defining the dynamics of the system.

An analogous discrete-time system theoretically exists that on the discrete time steps of a sampling method perfectly reproduces the values of the continuous time system:

$$\mathbf{x}_{n+1} = f_d \begin{pmatrix} \mathbf{u}_n \\ \mathbf{x}_n \end{pmatrix}$$

where the $u_n$, $y_n$ and $x_n$ are samples of the continuous time inputs, outputs and states and $f_d$ is an unknown function.

The neural network is trained to approximate $f_d$ using a new function $\hat{f}_d$ and hence approximate the dynamics of the system:

$$\mathbf{x}_{n+1} = \hat{f}_d \begin{pmatrix} \mathbf{u}_n \\ \mathbf{x}_n \end{pmatrix}$$

Signal processing means such an amplifier often exhibit a non-linear behaviour, wherein a non-linear function is one in which the superposition principle does not apply. The neural network is trained to mimic this non-linear behaviour.

Throughout the description, the signal processing means to be emulated may be a continuous-time physical system or a reference discrete-time system. From a continuous-time physical system training data is generated via sampling digital signal values on discrete-time steps. The signal processing means to be emulated may be a digital or an analogue signal processing means, an effect processor, a digital or analogue electrical circuit, or an electro-mechanical circuit. In its simplest form it may be an oscillating circuit which requires no further input signal to produce an oscillating output signal.

Preferably, the method further comprises the step of obtaining sampled input signal values $u_n$ provided to the signal processing means to be emulated, the training data set comprising the sampled input signal values $u_n$, wherein the input signal values $u_n$ at time step n are also input to the neural network system. These input values may be audio signals.

The method may further comprise the step of applying a control parameter values $c_n$ of the signal processing means as a further input to the neural network system. Such a control parameter can be the input of a knob provided at the signal processing means to be emulated, for instance its amplification gain setting. Further control parameters may be signal frequency filter controls, dynamic compression controls, saturation controls, signal offset or polarity.

The method of may also further comprise the step of providing status indication values $s_n$ of a status of the signal processing means to emulated as a further output of the neural network system. Such status indication may be an LED being switch on the signal processor device to be emulated. Further status indication may include loudness meter, moving average mean signal value, or binary state of a switch component.

Preferably, the neural network system is trained such that an increment between two consecutive states $x_n$ and $x_{n+1}$ is the value representative of the at least one internal state signal, the increment being summed with a previous internal state signal value $x_n$ to obtain the next internal state signal value $x_{n+1}$. The use of the small difference between the state values during time evolution of the dynamics can advantageously improve the training process of the neural network system.

The method of any one of the previous claims, wherein the signal processing means to be emulated is a digital or an analogue signal processing means, an effect processor, a digital or analogue electrical circuit, or an electro-mechanical circuit.

The stored parameters of the neural network system may comprise the values of trained weights of the neural network system, and/or the number of hidden layers and the number of nodes of the input layer, each hidden layer, and the output layer of the neural network system. Optionally, also the time step of the training data may be stored.

Further provided is an emulated signal processing means which is obtained by the above described method of emulating a signal processing means.

Further provided is a method of processing a signal comprising the steps of
providing an emulated signal processing means obtained by the method of emulating a signal processing means as described above, the emulated signal processing means comprising a trained neural network system;

applying an internal state value $x_n$ at time step n as an input signal to the trained neural network system, wherein at time step n=0 the internal state value $x_o$ is an initialized value, and at all other time steps the internal state value $x_n$ is a previous output of the trained neural network system obtained by a feedback loop from the neural network system output layer to the neural network system input layer,

receiving as an output signal of the trained neural network system an internal state signal value $x_{n+1}$ of time step n+1, and if the output signal of the signal processing means to be emulated is not an internal state signal thereof, an output signal value $y_n$ of time step n,

outputting the internal state signal value or, if the output signal of the signal processing means to emulated is not an internal state signal thereof, the output signal value $y_n$ of time step n as an output signal value $z_n$ of the emulated signal processing means.

The method may further comprise the step of applying a discrete input signal values $u_n$ at time step n as input to the trained neural network system.

The method may further comprise the step of applying as a further input to the trained neural network a control parameter values $c_n$.

The method may further comprise the step of receiving as a further output to the trained neural network system status indication values $s_n$.

In case the neural network system is trained such that an increment between two consecutive states $x_n$ and $x_{n+1}$ is the value representative of the at least one internal state signal, the increment being summed with a previous internal state signal value $x_n$ to obtain the next internal state signal value $x_{n+1}$, the increment may be multiplied by a gain factor, wherein the gain factor is defined as a fraction of a desired time-step used for processing an signal divided by a time-step used for training the neural network system.

In addition, a signal processing unit is provided comprising at least one emulated signal processing means obtained by the initially described method of emulating a signal processing means, the emulated signal processing means comprising a trained neural network system. Further provided is an internal sound source configured to be an input to the trained neural network system; and an output unit configured to receive an output signal of the trained neural network system and to output this output signal.

The unit may further comprise a control input interface configured to receive an external control signal, the control input interface providing an additional input to the trained neural network system and/or an internal control source configured to produce an internal control signal providing an additional input to the trained neural network system.

The unit may further comprise a storage for storing the parameters of the at least one emulated signal processing means.

The unit may further comprise a plurality of emulated signal processing means, and a selection unit for selecting at least one of the provided emulated signal processing means. This allows the user to select a desired emulated signal processing means for his use.

Provided is also a computer program product comprising instructions which, when the program is executed by a computer, causes the computer to carry out the method of emulating a signal processing means as initially described, and/or the method of processing a signal as described above.

In one aspect, a method of processing a signal is provided comprising the steps of:

providing an emulated signal processing means obtained by the method comprising the following steps:

obtaining sampled data at discrete time steps n of output signal values as outputted by a signal processing means to be emulated, and at least one internal state signal values of an internal state of the signal processing means to be emulated;

training a neural network system on a processor unit with a set of training data, the training data being the obtained sampled data of the signal processing means to be emulated, wherein the neural network system comprises an input layer, at least one hidden layer, and an output layer, wherein an input to the neural network system during training is provided by the value of the at least one internal state signal values at time step n, and an output of the neural network system is: (a) in case the output signal of the signal processing means is equal to one of the at least one internal state signal: a value representative of the at least one internal state signal value of the signal processing means at time step n+1, or (b) in all other cases: a value representative of the at least one internal state signal value of the signal processing means at time step n+1, and the output signal values of the signal processing means; and

storing the parameters of the trained neural network system on a storage unit;

applying an internal state value at time step n as an input signal to the trained neural network system, wherein at time step n=0 the internal state value is an initialized value, and at all other time steps the internal state value is a previous output of the trained neural network system obtained by a feedback loop from the neural network system output layer to the neural network system input layer,

receiving as an output signal of the trained neural network system an internal state signal value of time step n+1, and if the output signal of the signal processing means to be emulated is not an internal state signal thereof, an output signal value of time step n, and

outputting the internal state signal value or, if the output signal of the signal processing means to emulated is not an internal state signal thereof, the output signal value of time step n as an output signal value of the emulated signal processing means.

The step of providing an emulated signal processing means may further comprise the step of applying sampled discrete input signal values at time step n as input to the neural network system, and wherein the step of applying further comprises applying sampled discrete input signal values at time step n as input to the trained neural network system.

The step of providing an emulated signal processing means may further comprise the step of applying sampled control parameter values of the signal processing means as a further input to the neural network system, and wherein the applying step further comprises applying as a further input to the trained neural network system sampled control parameter values of a control parameter.

The step of providing an emulated signal processing means may further comprise the step of receiving as a further output of the trained neural network system status indication values, and wherein the applying step further comprises the step of receiving as a further output of the trained neural network system status indication values.

If the neural network system is trained such that an increment between two consecutive internal state signal values at time step n and at time step n+1 is the value representative of the at least one internal state signal, the increment is summed with a previous internal state signal value to obtain the next internal state signal value. The increment is preferably multiplied by a gain factor, wherein the gain factor is defined as a fraction of a desired time-step used for processing a signal divided by a time-step used for obtaining the sampled data for training the neural network system.

The signal processing means to be emulated may be a digital or an analogue signal processing means, an effect processor, a digital or analogue electrical circuit, or an electro-mechanical circuit.

The stored parameters of the neural network system may be at least one chosen from the group containing: the values of trained weights of the neural network system, the number of hidden layers and the number of nodes of the input layer, the number of nodes in each hidden layer, and the number nodes of the output layer of the neural network system.

Further provided is an emulated signal processing means, the means being obtained by the steps of:

obtaining sampled data at discrete time steps n of output signal values as outputted by a signal processing means to be emulated, and at least one internal state signal values of an internal state of the signal processing means to be emulated;

training a neural network system on a processor unit with a set of training data , the training data being the obtained sampled data of the signal processing means to be emulated, wherein the neural network system comprises an input layer, at least one hidden layer, and an output layer, wherein an input to the neural network system during training is provided by the value of the at least one internal state signal values at time step n, and an output of the neural network system is: (a) in case the output signal of the signal processing means is equal to one of the at least one internal state signal: a value representative of the at least one internal state signal value of the signal processing means at time step n+1, or (b) in all other cases: a value representative of the at least one internal state signal value of the signal processing means at time step n+1, and the output signal values of the signal processing means ; and

storing the parameters of the trained neural network system on a storage unit.

In addition, a signal processing unit may be provided comprising at least one emulated signal processing means obtained by the method as described before, the emulated signal processing means comprising a trained neural network system; an internal sound source configured to be an input to the trained neural network system; and an output unit configured to receive an output signal of the trained neural network system and to output this output signal.

The unit may further comprise a control input interface configured to receive an external control signal, the control input interface providing an additional input to the trained neural network system and/or an internal control source configured to produce an internal control signal providing an additional input to the trained neural network system .

The unit may further comprise a storage unit adapted for storing the parameters of the at least one emulated signal processing means.

The unit may further comprise a plurality of sets of stored parameters, and a selection unit for selecting at least one of the provided sets of stored parameters to be used in the emulated signal processing means.

A computer program product may be provided comprising instructions which, when the program is executed by a computer, causes the computer to carry out the method of signal processing as described above.

The characteristics, features and advantages of this invention and the manner in which they are obtained as described above, will become more apparent and be more clearly understood in connection with the following description of exemplary embodiments, which are explained with reference to the accompanying drawings.

## BRIEF DESCRIPTION OF THE DRAWINGS

In the drawings, same element numbers indicate same elements in each of the views:

Fig. 1     depicts a first embodiment of signal processing means 10 to be emulated under the present invention,

Fig. 2     depicts a first embodiment of the inventive system 100 used for emulating a signal processing means 10,

Fig. 3     depicts a first embodiment of an inventive emulated signal processing means 200,

Fig. 4     depicts a second embodiment of an inventive emulated signal processing means 200,

Fig. 5     depicts a third embodiment of an inventive emulated signal processing means 200,

Fig. 6     depicts three phases of sampling data, training the network and processing a signal,

Fig. 7A     depicts sampling of data from a first signal processing means 10,

Fig. 7B     depicts the time domain match between measured and emulated output signal for the first signal processing means 10 of Fig. 7A,

Fig. 7C     depicts the frequency domain match between measured and emulated output signal for the first signal processing means 10 of Fig. 7A,

Fig. 8A     depicts sampling of data from a second signal processing means 10,

Fig. 8B     depicts the time domain match between measured and emulated output signal for the second signal processing means 10,

Fig. 8C     depicts the frequency domain match between measured and emulated output signal for the second signal processing means 10,

Fig. 9A     depicts sampling of data from a third signal processing means 10,

Fig. 9B     depicts the time domain view of two periodic input signals, "sawtooth" and "guitar" for the signal processing means 10 of Fig. 9A,

Fig. 9C     depicts the time domain match between measured and emulated output signal for the third signal processing means 10, when receiving the "sawtooth" input signal,

Fig. 9D     depicts the time domain match between measured and emulated output signal for the third signal processing means 10, when receiving the "guitar" input signal,

Fig. 9E     depicts the frequency domain match between measured and emulated output signal for the third signal processing means 10,

Fig. 10     depicts a first audio application 300 for the neural network system 210,

Fig. 11     depicts a second audio application for 300 the neural network system 210,

Fig. 12     depicts the process of storing multiple neural network parameters 111 for multiple emulated signal processing means 200 in a storage unit.

## DESCRIPTION OF THE PREFERRED EMBODIMENTS

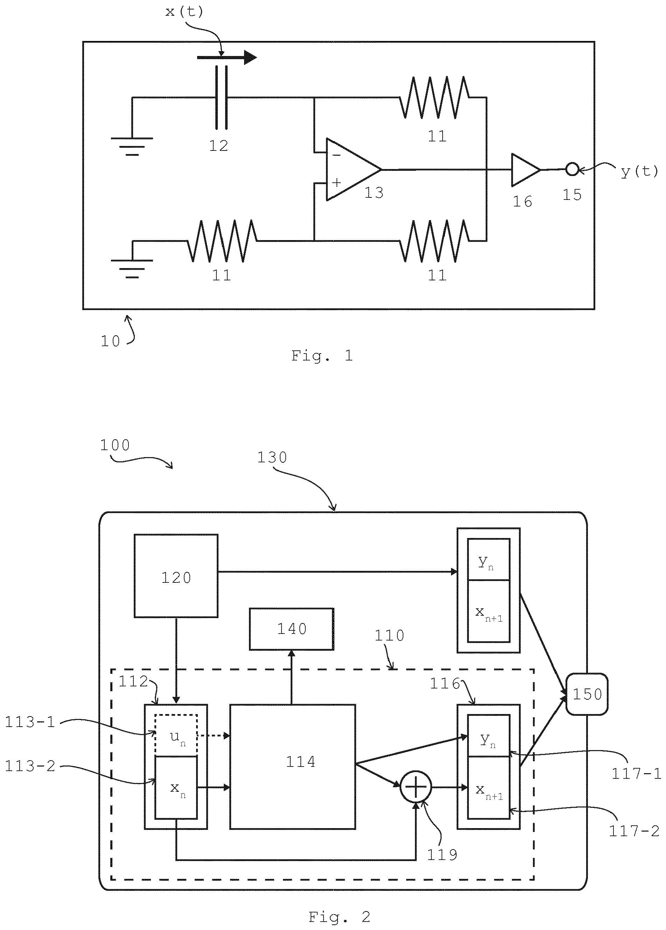

Figure 1 schematically shows an example of a signal processing means 10 to be emulated under the present invention. In the following, the signal processing means to be emulated may also be called original system. In general the signal processing means 10 to be emulated can be any hardware or software system providing an output signal, for instance a digital or an analogue signal processing device, a digital or analogue electrical circuit, an electro-mechanical circuit, an effect processor, an amplifier etc. In one of its simplest versions, the signal processing means 10 could be an oscillating circuit as shown in Fig. 1. A basic RC oscillator uses resistors 11 and a capacitor 12 together with an amplifier 13 to produce a sine wave output signal y(t) at node 15 absent to any incoming signal. The voltage of the capacitor 12 is the internal state signal x(t). The regenerative feedback of the circuit relates to the ability of the capacitor to store an electric charge. In more complex cases, a signal input u(t) may be provided to the signal processing means, which is subsequently processed in the signal processing means to derive an output signal y(t). The input signal u(t) may be an audio input signal and the output signal y(t) may be a processed audio signal provided to a speaker or other devices.

In a state system approach, the states relate to stored energy in a system, i.e. the states are the voltage stored in the capacitors. This voltage is time varying due to the oscillation of the circuit. The first step of the provided method of emulating a signal processing means is to sample the output signal y(t) and the state signal x(t) at n different time steps, where n is an integer, to obtain the output signal values $y_n$ and $x_n$ for all time steps n. The state-space approach, also known as phase-space approach is a powerful mathematical formalism that can describe any system which can be characterised by a system of ordinary differential equations. In continuous-time, it can be written as:

$$\dot{\mathbf{x}}(t) = f(\mathbf{u}(t), \mathbf{x}(t))$$

$$\mathbf{y}(t) = g(\mathbf{u}(t), \mathbf{x}(t))$$

where u(t) is the vector of inputs to the system, y(t) is the vector of outputs and x(t) are the internal 'states' of the system. This can also be written in a single equation form, by concatenating the internal states with the input or output:

$$\begin{aligned} \dot{\mathbf{x}}(t) \\ \mathbf{y}(t) \end{aligned} = f_a \begin{pmatrix} \mathbf{u}(t) \\ \mathbf{x}(t) \end{pmatrix}.$$

The function $f_a$ therefore completely describes the behaviour of the system. Note that in cases where the state of a system is directly taken as the output, there is no need for any y variables. The discrete-time analogue given constant time-steps, where $n = \tau \cdot t$ with $\tau$ being the sampling interval is given by:

$$\begin{aligned} \mathbf{x}_{n+1} \\ \mathbf{y}_n \end{aligned} = f_d \begin{pmatrix} \mathbf{u}_n \\ \mathbf{x}_n \end{pmatrix}$$

which allows the behaviour of the system to be calculated iteratively based on its inputs and previous states.

In the present invention, access to the signal processing means to be emulated allows not only to sample the input and output signals u(t) and y(t) of the system to be emulated, but allows to gain access to the signal x(t) corresponding to the states of the system. If the system is fed with test input signals u(t), and the state and output signals x(t) and y(t) are sampled at discrete time points, respectively, a large set of data-points can be obtained describing the input and output relationship of the function $f_d$. In order to replicate the behaviour of the system for arbitrary input, this data can be used to produce a new function $f^\wedge_d$ that approximates $f_d$ to an appropriate degree of accuracy.

This is essentially a regression task, and could be tackled via any number of standard techniques. However, it is well suited to the application of an artificial neural network ANN which is known to be universal approximators, i.e. they are capable of approximating any continuous function of N real variables arbitrarily well. The system can then be simulated iteratively as usual, but using the approximated function $f^\wedge_d$ instead of an $f_d$ derived analytically through discretization. The system can then be written as:

$$\begin{aligned} \mathbf{x}_{n+1} \\ \mathbf{y}_n \end{aligned} = \hat{f}_d \begin{pmatrix} \mathbf{u}_n \\ \mathbf{x}_n \end{pmatrix}.$$

The choice of what quantities to take as the states of the system is not as strict as it might first appear. Whilst the real states of the system are the quantities that store energy, and hence information e.g. capacitors, other quantities in the system will be related to those states by a mapping linear in the best case, but likely nonlinear. This means that as long as we have sufficient measured quantities compared to the number of states of the system, we should be able to learn its dynamics. The formal upper bound on the number of independent measurements needed is given by the Whitney embedding theorem as 2m+1, where m is the number of states. Additionally Taken's theorem allows us to replace some or all of these measurements with time-delayed versions of another measurement. In practice, the dynamics in this transformed state-space may be more complicated, and hence it is preferable to use measurements as close as possible to the real states of the system.

The formulation of the problem in state-space terms is advantageous, as it means that the function $f_d$ required to be approximated is purely a static, i.e. memoryless, mapping. The proposed method is distinct from autoregressive modelling which predicts the next often scalar output based on a sequence of past observations. Instead of considering only the input-output behaviour of the system, the present invention maps from the state space into itself. Speaking in terms of dynamical systems, this means the piece-wise flow along the trajectory of the system is learned. An optional input signal u can be considered as a parameter that influences this flow.

The core of the neural network system employed in the present invention is a Multilayer Perceptron MLP, i.e. series of k densely connected layers with an activation function. The number of layers and the layer width is tuned to suit the particular system being modelled, with small systems potentially needing only small networks. The activation function can be changed to fit the system, but generally saturating nonlinearities such as tanh produce good results. These functions are advantageous since signal processing means to be emulated like electronic circuits, generally contain nonlinearities of the saturating type. Simpler activations such as Rectified Linear Units ReLU can be used, with the caveat that the size of the network will then generally need to be larger. However, other architectures and structures of the neural network system can be used as well.

The proposed neural network system 110 used in the proposed method of emulating a signal processing means 10 of Fig. 1 is shown in Fig. 2 as a system 100 used for emulating a signal processing means 10.

The obtained sampled data of the signal processing means 10 to be emulated at n discrete time steps are used for training the neural network 110, where n is an integer. Specifically, the obtained sampled state values $x_n$ for at least one state of the signal processing means to be emulated and the output signal values $y_n$ of the signal processing means to be emulated are used to train the neural network system 110. However, in some cases the output signal is identical to an internal state signal. In such a case, the information is redundant and only the state signal may be used. The neural network system 110 consists of an input layer 112 having at least one input node 113 (here 131-1, 113-2), a number of hidden layers 114 with a plurality of hidden layer nodes 115 and an output layer 116 with at least one output node 117 (here 117-1, 117-2). In case an internal state of the system is also the output of the signal processing means, then only the state signal values are used to train the neural network system 110.

From the set of training data 120, the input layer 112 iteratively receives internal state values $x_n$ for all time steps n. Optionally, it may additionally receive sampled input signal values $u_n$ in case the signal processing means to be emulated processes an input signal to derive an output signal as discussed previously.

Training of neural network systems 110 is well-known in the art. During training of a neural network system 110 the parameters 111 of the system, the so-called weights are changed such that a norm between the actual output of the neural network system 110 and the sampled data is optimized until a certain criterion for stopping the training is fulfilled. In the present case, the output layer 116 consists of the signal output values $y'_n$ and internal state signal values $x'_{n+1}$ produced during training, which are compared to the targeted sampled output signal values $y_n$ of the original system 10 and targeted sampled internal state signal values $x_n$ of the original system 10, respectively. A loss function 150 is calculated as a metric of approximation between the output values $y'_n$, $x'_{n+1}$ of the output layer 116 of the neural network system 110 during training and the sampled outputs $y_n$, $x_{n+1}$ of the original system 10. Optimization of the iterated neural network system 110 is performed by only keeping changes to the parameters 111 of the neural network 20 which result in a lower loss function, where after a certain number of iterations the loss 150 converges to a certain value, accepted as a successful approximation, based on a predetermined success condition. It is pointed out that throughout the description an original system can have more than one internal state.

Advantageously, the states $x_n$ and their values at the new time step $x_{n+1}$ are likely to be closely related. Therefore, the neural network system 110 as shown in Fig. 2 is structured in a residual fashion using a skip-layer connection before the output layer 116. Skip-layer connections have been successfully applied in different domains. The implication of this is that the network is learning a residual of the state signals compared to their previous value, rather than the new values directly. This consistently improved training speed and accuracy in the case of the considered systems. Therefore, before the output node 117-2 relating to the next internal state value $x_{n+1}$, the previous states and its increments are summed at element 119 to obtain the next internal state value $x_{n+1}$. However, in another embodiment, the state values themselves can be used for training without a summer 119. Alternatively, only the increments could be passed through a feedback loop and the summing of increment and last current state take place inside the next iteration.

After training stopped, a set of parameters 111 of the neural network system 110 is stored on a storage unit 140. The set of parameters may comprise the values of trained weights of the neural network system 110, the number of hidden layers 114 and the number of nodes of the input layer 112, each hidden layer 114, and the output layer 116 of the neural network system 110.

Consequently, the proposed method of emulating a signal processing means 10 comprising the step S100 of obtaining sampled data at n discrete time steps of the signal processing means 10 to be emulated, S110 training a neural network system 110 with those sampled data, and S120 storing a set of parameters of the trained neural network system 110. The step S100 of obtaining sampled data comprises obtaining sampled data at discrete time steps n of output signal values $y_n$ as outputted by the signal processing means 10 to be emulated, and at least one internal state signal values $x_n$ of an internal state of the signal processing means 10 to be emulated. The step S110 of training a neural network system 110 comprises training a neural network system 110 on a processor unit 130 (schematically shown in Fig. 2) with a set of training data, the training data being the obtained sampled data of the signal processing means 10 to be emulated, wherein the neural network system 110 has an input layer 112, at least one hidden layer 114 and an output layer 116, an input to the neural network system 110 during training is the at least one internal state signal value $x_n$ at time step n, and an output of the neural network system 110 is a value representative of the at least one internal state signal value $x_{n+1}$ of the signal processing device at time step n+1, and the output signal values $y_n$ of the signal processing device. The step of storing S120 a set of parameters 111 comprises the step of storing a set of parameters 111 of the trained neural network system 110 on a storage unit 140.

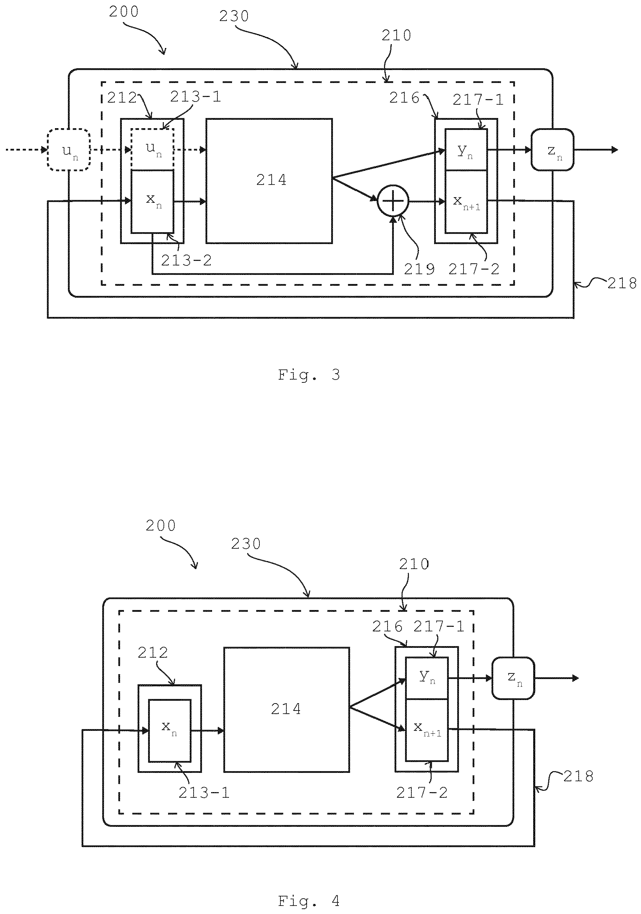

Fig. 3 and Fig. 4 show embodiments of the emulated signal processing means 200 derived from the above described method of emulating a signal processing device 10. Thus, the training is finished and now the emulated signal processing means 200 comprising a trained neural network system 210 is used to process a signal. Again, as before, the now trained neural network system 210 consists of an input layer 212 having at least one input node 213, a number of hidden layers 214 with a plurality of hidden layer nodes 215 and an output layer 216 with at least one output node 217. An output signal value $y_n$ is generated at every time step n of the inventive method depending on the internal process and optionally also dependent on an external signal input $u_n$. Without signal input, the emulated signal processing means 200 works as an autonomous signal source.

For each time step or iteration in state space, the hidden layers 214 of the trained neural network system 110 receive at least one input through an input layer 212 and generates outputs through an output layer 216, where the inputs contains a current state of the system $x_n$ and the output contains both a signal output $y_n$ and an increment which is summed at summer 219 with the current state of the system to produce a next state of the system $x_{n+1}$. As the processing method proceeds to the next iteration, the next state of the system is passed through a feedback loop 218 to the next iteration where it becomes the new current state of the system at input to input node 213-2. The emulated signal processing means 200 provides as an output a signal $z_n$. Usually, the output $z_n$ of the emulated signal processing means 200 is the same as the output of the trained neural network. However, a further processing step could be applied between the output of the trained neural network and the output of the emulated signal processing means 200 such that $z_n$ will depend on $y_n$ but may not be identical.

The inventive emulated signal processing means 200 employs processor unit 230 (not shown) for processing. The emulated signal processing means 200 can be provided in software, in hardware or in a mixture of both. The output of the emulated signal processing means 200 is a physical/electrical signal.

In an alternative embodiment, only the increments could be passed through a feedback loop and the summing of increment and last current state take place inside the next iteration.

Fig. 4 shows an emulated signal processing means 200 of Fig. 3 without the input signal $u_n$. Everything else remains the same as in Fig. 3.

In an audio application, a specific implementation of the first embodiment is used as a virtual analogue emulation of diode clipping circuit. The digital signal processor is running at audio rates, for example 44,1 kHz sampling frequency, iterating the iterative computational process 2 44100 times per second with evenly spaced time steps between samples. Without an input signal $u_n$ the iterative computational method could still generate an output signal $y_n$, e.g. acting as an oscillator source. With an incoming audio signal $u_n$, e.g. a digitized audio signal from an electric guitar, the method of digital signal processing generates an outgoing sample $z_n=y_n$ for every input sample $u_n$, thus continuously processing the audio stream.

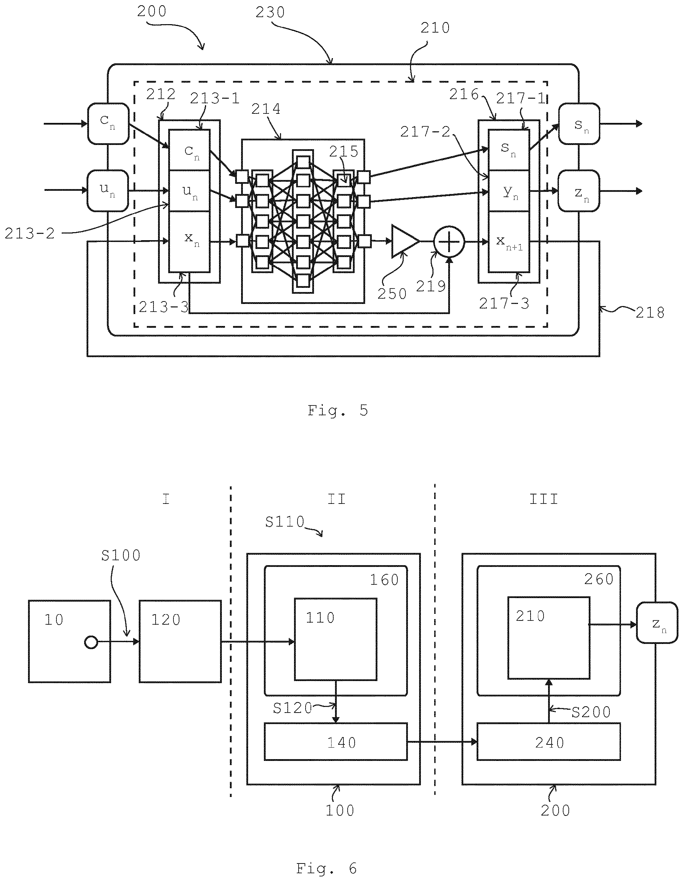

For a second preferred embodiment of the invention, Figure 5 shows a schematic structural diagram of an emulated signal processing means 200 derived from the method of emulating a signal processing means. The trained neural network system 210 is used in each processing iteration to generate an output signal value $z_n$. For every time step or iteration of the process, a control parameter value $c_n$ may be optionally received. Optionally as above, an input signal value $u_n$ may also be received. The input layer 212 of the neural network system 210 receives the optional signal input $u_n$, internal states signal values $x_n$ and a control input $c_n$ at nodes 213-1 to 213-3. These inputs are connected to nodes 215 of the hidden layer 214 which consists of neural layers each consisting of at least one neural node 215 where the nodes of successive layers are connected. An output layer 216 is outputting an optional status output $s_n$, an output signal value $y_n$ and a states output $x_{n+1}$ representing the state of the next iteration at nodes 217-1, 217-2. As the computational method proceeds to the next iteration, the next state of the means 200 is passed through a feedback loop 219 to the next iteration where it becomes the new current state. The processing iteration produces for each set of input signal values $u_n$ and control parameter input $c_n$ an output signal value $z_n$ and also a status indication output $s_n$ which is providing information about the dynamic system.

In a variation of the second preferred embodiment, the variation of the sampling frequency of the iterative method compared to the sampling frequency of an iterative training is compensated for. Before an increment is summed with the current state of the system to produce a next state of the system $x_{n+1}$ it is scaled by a gain factor $\tau$ 250.

$$h_\tau = \frac{\tau_p}{\tau_t} = \frac{F_t}{F_p}$$

where $\tau_p$, $\tau_t$ are the time-steps used for processing and for training respectively, and equivalently $F_p$ and $F_t$ are the sampling frequencies used for processing and for training.

Care must be taken when using this facility to run the system at a different sampling frequency than the one which it was trained for. Whilst the time-scale will be correctly altered, this does not make the system equivalent to one trained at the new sampling frequency. Running the system at a lower sampling frequency than used for the training raises the possibility of aliasing being introduced by elements of the learned behaviour that exceed the new Nyquist limit. Running the system at a higher sampling rate than it was trained at poses less risks, although the modelled system will potentially lack high-frequency behaviours that might have been present if the system had been trained at a higher sampling frequency. Oversampling compared to audio-rate is recommended in most situations, as the system does not utilize any specific antialiasing and hence will produce aliasing in the same situations as a normal nonlinear state-space system.

It is pointed out that in the above second embodiment of the emulated signal processing means, the control parameter input $c_n$, the input signal $u_n$, and the status output $s_n$ are only optional. Depending on the signal processing means to be emulated, they may be used all together or independently as inputs respectively outputs of the emulated signal processing means.

For further illustration of the previously described embodiments, Figure 6 shows a diagram of three phases I, II, III, where the first phase I is a sampling process S100 for obtaining sampled data from a signal processing means 10, where in a second phase II the sampled data is used in the method of emulating a signal processing means 10 in training S110 of a neural network system 110, which is an iterative training process 160, where at the end of the training a set of parameters 111 of the neural network system 110 is stored in step S120 to a storage unit 140, and where in a third phase these stored parameters 111 of the neural network system 110 define a trained neural network system 210 used in a process iteration 260 of a method for signal processing to provide and output a processed signal z(t).

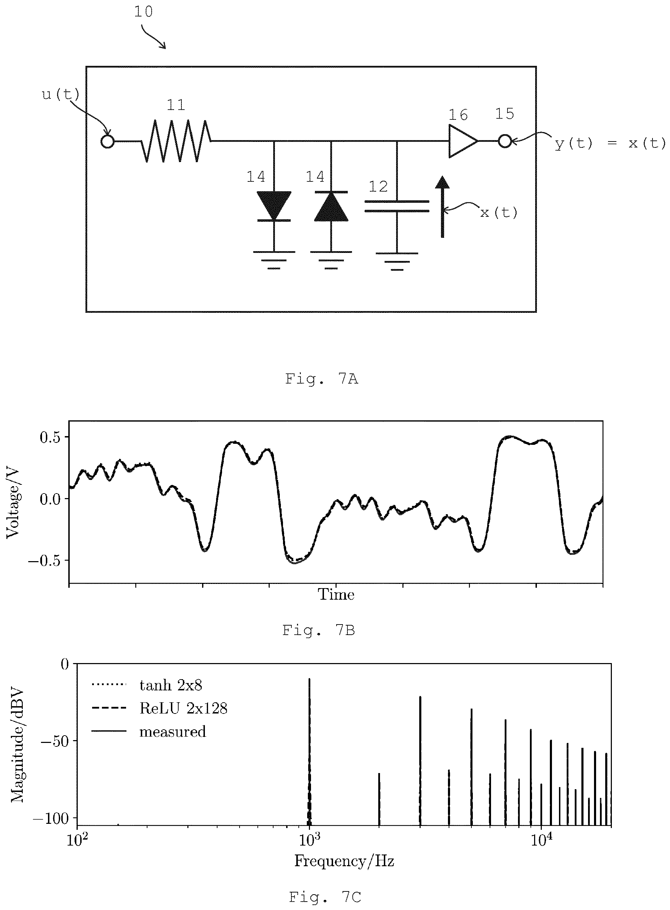

Figure 7-9 show three different signal processing means 10 which were emulated according to the present invention and then used for processing signals. A measurement signal was applied to the different signal processing means 10, and the state $x_n$ and output signals $y_n$ were recorded using an analogue-to-digital converter (ADC). Unity gain op-amp buffers were used to isolate the measurement points from the load of the ADC. In some situations, node voltages were recorded instead of differential voltages across capacitors (i.e. the required states). In these cases, the differential voltage was recovered in post-processing by linear combination with other recorded node voltages.

Theoretically, any signal can be used to generate the measurements used to train the neural network system 210. In practice, some important considerations have to be made. In contrast to other black-box modelling techniques, measurements with varying frequency input, e.g. a sine-sweep, are not strictly necessary to capture the behaviour of the system under consideration. This is because behaviour at all time-scales is captured in the learnt state trajectories. However, the chosen measurement signal does have a number of important impacts on the process.

The measurement signal defines the subset of the state space which will be sampled. In complicated systems, particular inputs could potentially be needed in order to access particular parts of the state space. A simple example of this could be a resonant filter circuit. In this case, an input signal at the resonant frequency would excite the circuit much more strongly than signals at other frequencies, potentially revealing nonlinear behaviours that only apply at high state magnitudes.

Care must also be taken to restrict the upper frequency of the measurement signal to significantly below the Nyquist frequency at the sampling rate used for the measurements. This is because the process of sampling the state signals and outputs is bandlimited. Components that exceed the Nyquist will be removed during the sampling process. Hence, harmonics produced in the real system may be lost. This means that state signals recorded in response to too high of a frequency will no longer accurately reflect the true state-space trajectory. This leads to measurements which appear to violate the constraint that each point in space can correspond to only one trajectory. In practice, the selection of a measurement signal is a balance between these two constraints, and can be tailored to the system under consideration. Typical input signals for the system can work well (e.g. guitar playing if modelling a distortion pedal), as can carefully specified sweeps. In this paper we used 10-second logarithmic sine-sweeps combined with low-level (-20dB) white noise. The noise was bandlimited to 22 kHz. This combined signal was then increased in amplitude linearly from zero to unity over half of the length of the measurement signal, in order to ensure the capture of sufficient data-points near the origin of the state-space. The minimum frequency of the sweep was taken as 20 Hz, and the maximum frequency was chosen to be 10 kHz in order to cover a sufficient amount of the state-space without corrupting the data with fictional trajectories. A sampling rate of 192 kHz may be used for measurement and training. Training may be done over 300 epochs, with a batch size of 256. Due to the small size of the networks under consideration, a GPU is not needed for the training process and is in-fact slower than training on a CPU with SIMD functionality.

As a first example for a signal processing means's dynamics to be approximated, Figure 7A shows an electrical diagram with access points of measurement. The shown electrical circuit 10 consisting of wired diodes 14, capacitors 12, resistors 11, and ground connectors, together work as a so called "diode clipper" which is distorting the input signal u(t) to a 'clipped' output signal y(t) depending on the input signal. For small input signals, (i. e. peak voltages below approximately 0,6V) the current flowing through the diodes is close to zero and the circuit reduces to a simple RC lowpass filter. For larger signal values the diodes will cause the output to saturate and the circuit becomes a nonlinear lowpass filter, with its instantaneous cut off frequency rising as the circuit is driven harder.

The original system 10 is contained in a measurement environment and digital values are sampled or a voltage signal input, a voltage signal output y(t) which is also a state of the system x(t) since there is only one capacitor and hence state present, and the value of this state is the output of the system. A buffered gain element 16 is placed in the circuitry to prevent the voltage measurement from disturbing the dynamics of the original system. A neural network with tanh transfer functions and two hidden layers having eight nodes each was used for the training and the processing of the data. Figure 7B shows an excellent match for time domain signal response between measurement, i.e. sampled output signal 41 shown as dashed lines, and output signal output 31 of the neural network system 20, which was trained and used in processing as described above. Figure 7C shows the corresponding frequency domain match for the same example.

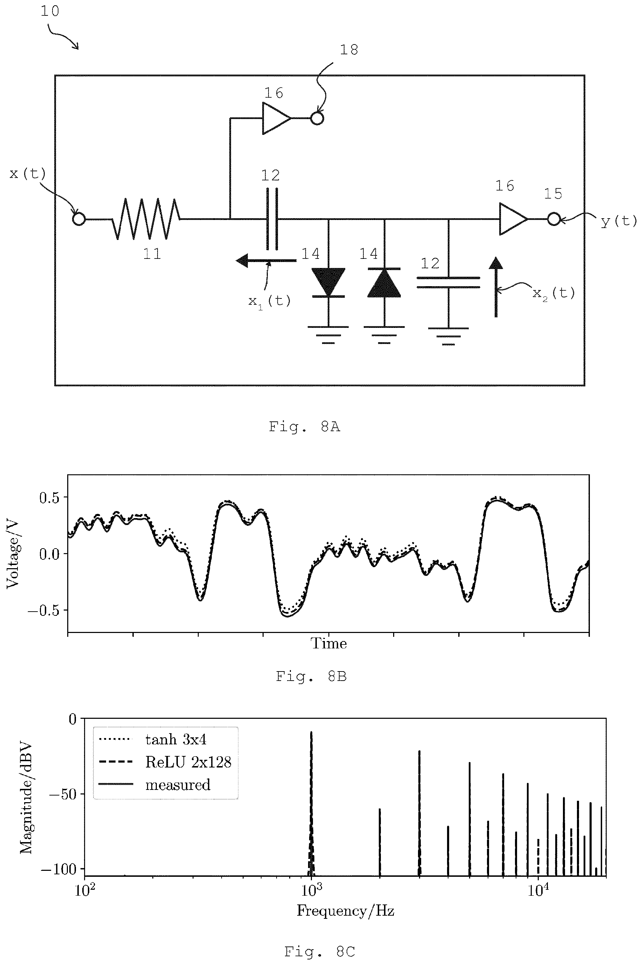

As a second example for a signal processing means's dynamics to be approximated, Figure 8A shows an electrical diagram with access points of measurement 18. The shown electrical circuit consisting of wired diodes 14, capacitors 12, resistors 11, and ground connectors, together work as a so called "2nd order audio clipper" which is distorting the input signal u(t) to a 'clipped' output signal depending on the input signal. The original system 10 is contained in a measurement environment and digital values are sampled for a voltage signal input u(t), a voltage signal output y(t) which is also a state of the system $x_2(t)$. A second state $x_1(t)$ of the system is calculated as a differential state $x_1 = v - x_2$ between the sampled voltage signal output $y(t)$ and a voltage sampled at an access point 18. Buffered gain elements 16 are placed in the circuitry to prevent the voltage measurement from disturbing the dynamics of the original system. A neural network system 210 with 3 hidden layers each having 4 tanh nodes was used to emulate this signal processing means 10. Figure 8B shows a very good match for time domain signal response between measurement, i.e. sampled output signal $y(t)$, and the respective output signal output of the neural network system 210, which was trained and used in processing as described above. Figure 8C shows the corresponding frequency domain match for the same example.

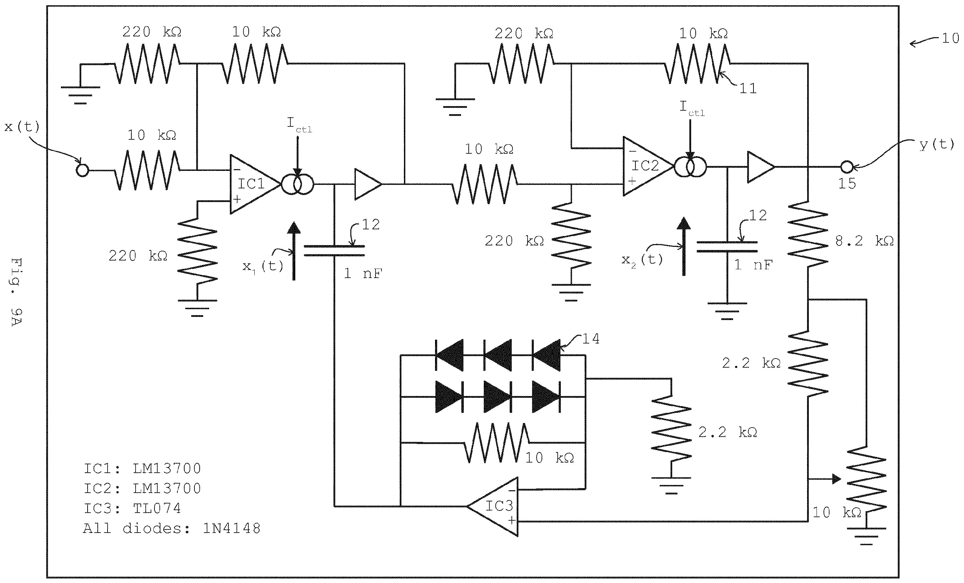

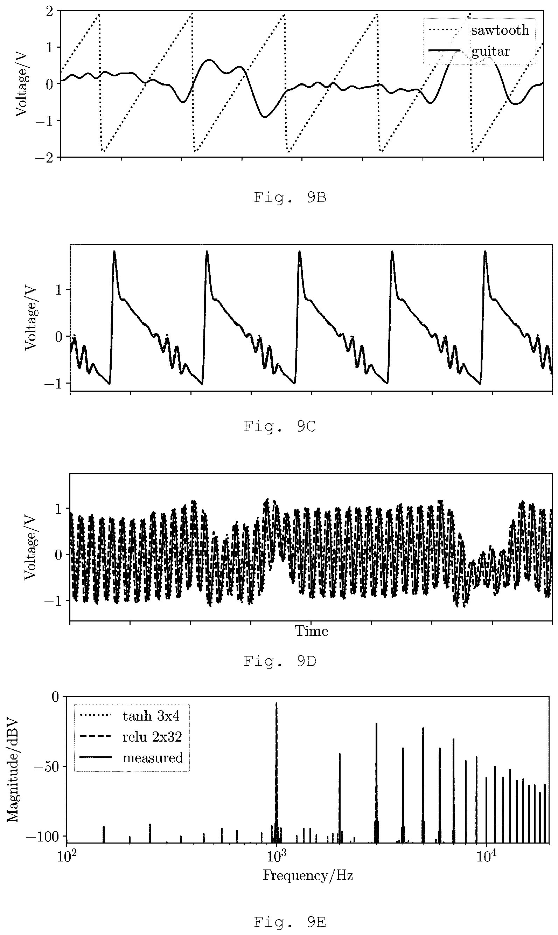

As a third, more complex, example for a signal processing means's dynamics to be approximated, Figure 9A shows an electrical diagram with access points of measurement the internal states $x_1(t)$ and $x_2(t)$ relating to two capacitors 12. The shown electrical circuit consisting of wired diodes 14, capacitors 12, resistors 11, and ground connectors, and integrated circuits together work as a low pass filter. Figure 9B shows two periodic input signals used in the third example, where the "guitar" input signal was also used in the first and second example. For the third example, Figure 9C shows the time domain match for "sawtooth" signal input, Figure 9D shows the time domain match for "guitar" signal input, and Figure 9E shows the frequency domain match.

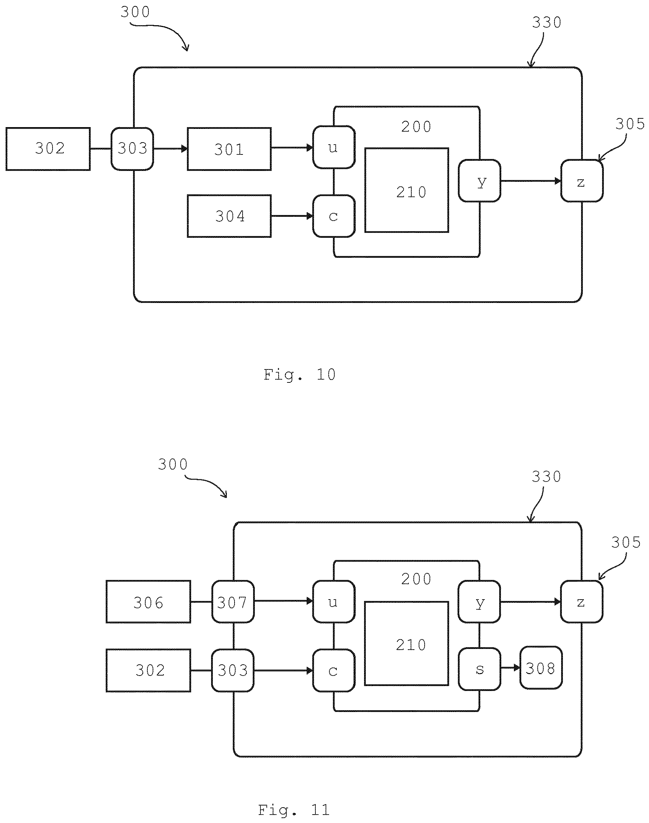

For illustration of an audio application 300 context for using the previously described preferred embodiments, Figure 10 shows a real-time audio application 300 as environment for the inventive method of signal processing, in this case a method of digital signal processing, containing a neural network system 210. The output signal value $y_n$ of the neural network system 210 is connected to an audio output 305 of the real-time audio application 300, where it may be recorded or heard. The output signal values $y_n$ coming from the neural network system 210 and the actual output signal value $z_n$ outputted by the audio application 300 will generally be the same but can also be different by including another signal processing step desired by the user of the system. The audio output 305 in this example iteratively outputs the output signal value $z_n = y_n$ for all time steps. An internal sound source 301 is connected to provide a discretized input signal value $u_n$ to the method of signal processing and also a control parameter input $c_n$ is generated from within a real-time audio application means 304. An external control source 302 may be connected via a control input interface 303 to control the internal sound source 301. Specifically, for example a controller keyboard 302 is used to play a software audio synthesizers oscillator and amplifier sections 301 which are then processed by a virtual analogue filter emulation 200 towards an external audio output 305, where the filter cut off is modulated by a low frequency oscillator in the audio application 300.

For another illustration of an application context for using the previously described preferred embodiments, Figure 11 shows a real-time audio application 300 as environment for method of digital signal processing containing a neural network system 210. The output signal value $y_n$ of the neural network system 210 is connected to an audio output 305 of the real-time audio application 300, where it may be recorded or heard. An external sound source 306 is connected via an audio input interface 307 to provide a discretized input signal value $u_n$ to the method of digital signal processing, and from an external control source 302 a control parameter input $c_n$ is received through a control input interface 303. Specifically, a control knob 302 may be used to change the gain setting for a virtual analogue guitar amplifier emulation 200 which is processing the signal from an electric guitar 306 towards an external audio output 305. A status indication 308 is connected to a status signal output of the neural network system 210 do indicate a status of the emulated signal processing device.

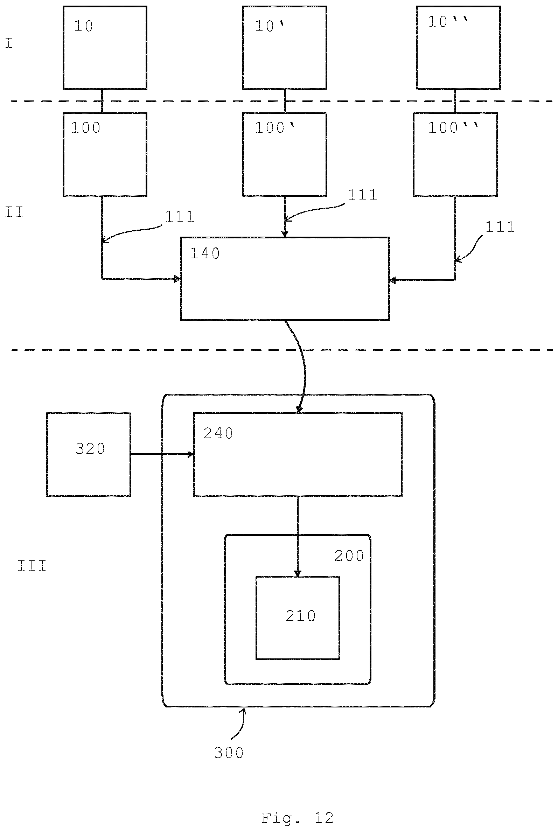

As an extension of the phases shown in Figure 6, Figure 12 shows how multiple signal processing means 10, 10', 10" are each sampled for emulating the respective signal processing means to train a neural network system 110 within a system 100 used for emulating the signal processing means 10 and then different sets of neural network parameters 111 of the neural network systems 110 are stored in a storage unit 140. The data may be stored in the storage unit 140 as a database.

In the signal processing unit 300 employing the inventive method for signal processing comprising an emulated signal processing means 200, a selection unit 320 can be used to choose a specific trained neural network system 210 from the storage unit 240 which received its data content from the storage unit 140 of the system used for emulating the signal processing means 10, 10', 10", and use it in the inventive iterative method of signal processing. In an audio application 300, this can be used to switch between several emulated signal processing means 200 at one point in the signal chain, using the method for digital signal processing as an audio effect in the application 300.

The inventive signal processing unit 300 employs processor unit 330 for processing. The emulated signal processing means 300 can be provided in software, in hardware or in a mixture of both. The output of the emulated signal processing means 300 is a physical/electrical signal.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

LIST OF REFERENCE SIGNS

| | |
|---|---|
| 10 | signal processing means to be emulated / original system |
| 11 | resistor |
| 12 | capacitor |
| 13 | amplifier |
| 14 | diode |
| 15 | node |
| 16 | buffered gain |
| 18 | measurement access point |

| | |
|---|---|
| $y(t), y_n$ | output signal of signal processing means |
| $u(t), u_n$ | input signal of signal processing means |
| $x(t), x_n$ | internal state signal |
| $s(t), c_n$ | status indicator signal |
| $c(t), y_n$ | control parameter |
| $z(t), z_n$ | output signal of emulated signal processing means |

| | |
|---|---|
| 100 | system used for emulating the signal processing means to be emulated |
| 110 | neural network system |
| 111 | parameters |
| 112 | input layer |
| 113 | input layer node |
| 114 | hidden layers |
| 115 | hidden layer node |
| 116 | output layer |
| 117 | output layer node |
| 119 | summer |
| 120 | training data |
| 130 | processor unit |
| 140 | storage unit |
| 150 | loss function |
| 160 | iterative training process |

| | |
|---|---|
| 200 | emulated signal processing means |
| 210 | neural network system |
| 212 | input layer |
| 213 | input layer node |
| 214 | hidden layers |
| 215 | hidden layer node |
| 216 | output layer |
| 217 | output layer node |
| 218 | feedback loop |
| 219 | summer |
| 230 | processor unit |
| 240 | storage unit |
| 250 | gain factor |
| 260 | processing iteration |

| | |
|---|---|
| 300 | signal processing unit |
| 301 | internal sound source |
| 302 | external control source |
| 303 | control input interface |
| 304 | internal control source |
| 305 | output unit |
| 308 | status indication |
| 320 | selection unit |

| | |
|---|---|
| 330 | processor unit |

**Claims**

1. A method of emulating a signal processing means (10) comprising the steps of:

    obtaining (S100) sampled data at discrete time steps n of:

        - output signal values ($y_n$) as outputted by a signal processing means (10) to be emulated, and
        - at least one internal state signal values ($x_n$) of an internal state of the signal processing means (10) to be emulated;

    training (S110) a neural network system (110) on a processor unit (120) with a set of training data (140), the training data (140) being the obtained sampled data of the signal processing means (10) to be emulated, wherein the neural network system (110) comprises an input layer (112), at least one hidden layer (114), and an output layer (116), wherein
    an input to the neural network system (110) during training is provided by the value of the at least one internal state signal values ($x_n$) at time step n, and
    an output of the neural network system (10) is:

        (a) in case the output signal of the signal processing means (10) is equal to one of the at least one internal state signal: a value representative of the at least one internal state signal value ($x_{n+1}$) of the signal processing means (10) at time step n+1,
        (b) in all other cases: a value representative of the at least one internal state signal value ($x_{n+1}$) of the signal processing means (100) at time step n+1, and the output signal values ($y_n$) of the signal processing means (10); and

    storing (S120) the parameters (111) of the trained neural network system on a storage unit (130).

2. The method of claim 1, further comprising obtaining sampled input signal values ($u_n$) provided to the signal processing means (10) to be emulated, the training data (118) comprising the sampled input signal values ($u_n$), wherein the input signal values ($u_n$) at time step n are also input to the neural network system (110).

3. The method of any one of the previous claims, further comprising the step of applying sampled control parameter values ($c_n$) of the signal processing means (10) as a further input to the neural network system (110).

4. The method of any one of the previous claims, further comprising the step of providing status indication values ($s_n$) of a status of the signal processing means (10) to be emulated as a further output of the neural network system (110).

5. The method of any one of the previous claims, wherein the neural network system (110) is trained such that an increment between two consecutive states at time step n and time step n+1 is the value representative of the at least one internal state signal, the increment being summed with a previous internal state signal value ($x_n$) for time step n to obtain the next internal state signal value ($x_{n+1}$) for time step n+1.

6. The method of any one of the previous claims, wherein the signal processing means (10) to be emulated is a digital or an analogue signal processing means, an effect processor, a digital or analogue electrical circuit, or an electro-mechanical circuit.

7. The method of any one of the previous claims, wherein the stored parameters (111) of the neural network system (110) is at least one chosen from the group containing: the values of trained weights of the neural network system (110), the number of hidden layers (114) and the number of nodes (113) of the input layer (112), the number of nodes (115) in each hidden layer (114), and the number nodes (117) of the output layer (116) of the neural network system (110).

8. An emulated signal processing means (200), the means (200) being obtained by the method of emulating a signal processing means (10) according to claims 1 to 7.

9. A method of processing a signal comprising the steps of:

   providing (S200) an emulated signal processing means (200) obtained by the method of any one of claims 1 to 7, the emulated signal processing means (200) comprising a trained neural network system (210);
   applying (S210) an internal state value ($x_n$) at time step n as an input signal to the trained neural network system (210), wherein at time step n=0 the internal state value ($x_0$) is an initialized value, and at all other time steps the internal state value ($x_n$) is a previous output of the trained neural network system (210) obtained by a feedback loop (219) from the neural network system output layer (216) to the neural network system input layer (212),
receiving (S220) as an output signal of the trained neural network system (210) an internal state signal value ($x_{n+1}$) of time step n+1, and if the output signal of the signal processing means (10) to be emulated is not an internal state signal thereof, an output signal value ($y_n$) of time step n, outputting (S230) the internal state signal value or, if the output signal of the signal processing means (10) to emulated is not an internal state signal thereof, the output signal value ($y_n$) of time step n as an output signal value ($z_n$) of the emulated signal processing means (200).

10. The method of claim 9, further comprising the step of applying sampled discrete input signal values ($u_n$) at time step n as input to the trained neural network system (110).

11. The method of claims 9 or 10, further comprising the step of applying as a further input to the trained neural network system (210) sampled control parameter values ($c_n$) of a control parameter.

12. The method of any one of claims 9 to 11, further comprising the step of receiving as a further output of the trained neural network system (210) status indication values ($s_n$).

13. The method of any one of the previous claims, wherein, if the neural network system (210) is trained such that an increment between two consecutive internal state signal values at time step n and at time step n+1 is the value representative of the at least one internal state signal, the increment being summed with a previous internal state signal value ($x_n$) to obtain the next internal state signal value ($x_{n+1}$), the increment preferably being multiplied by a gain factor (260), wherein the gain factor (260) is defined as a fraction of a desired time-step used for processing a signal divided by a time-step used for obtaining the sampled data for training the neural network system (110).

14. A signal processing unit (300) comprising:

   an emulated signal processing means (200) obtained by the method of any one of claims 1 to 7, the emulated signal processing means (200) comprising a trained neural network system (210);
   an internal sound source (301) configured to be an input to the trained neural network system (210); and
   an output unit (305) configured to receive an output signal of the trained neural network system (210) and to output this output signal.

15. The unit of claim 14, further comprising a control input interface (303) configured to receive an external control signal, the control input interface (303) providing an additional input to the trained neural network system and/or an internal control source (304) configured to produce an internal control signal providing an additional input to the trained neural network system (210).

16. The unit of claims 14 or 15, further comprising a storage unit (240) for storing the parameters of the emulated signal processing means (300).

17. The unit of any one of claims 14-16, further comprising a plurality of sets of stored parameters (111) stored in a storage unit, and a selection unit (320) for selecting at least one of the sets of stored parameters (111) to be used in the emulated signal processing means (200).

18. A computer program product comprising instructions which, when the program is executed by a computer, causes the computer to carry out the method of any one of claim 1 to 7, and/or the method of any one of claims 9 to 13.

x(t)

12

11

13

11                    11

16    15

y(t)

10

Fig. 1

100

130

120

$Y_n$

$x_{n+1}$

140

110

112

113-1

$u_n$

113-2

$x_n$

114

116

$Y_n$

$x_{n+1}$

150

117-1

117-2

119

Fig. 2

Fig. 3

Fig. 4

Fig. 5

Fig. 6

Fig. 7A

Fig. 7B

Fig. 7C

Fig. 8A

Fig. 8B

Fig. 8C

Fig. 9A

Fig. 9B

Fig. 9C

Fig. 9D

Fig. 9E

Fig. 10

Fig. 11

I

```
┌──────────┐        ┌──────────┐        ┌──────────┐
│ 10       │        │ 10`      │        │ 10``     │
│          │        │          │        │          │
└────┬─────┘        └────┬─────┘        └────┬─────┘
```

- - - - - - - - - - - - - - - - - - - - - - - - - - - - - - - - -

```
┌────┴─────┐        ┌────┴─────┐        ┌────┴─────┐
│ 100      │        │ 100`     │        │ 100``    │
│          │        │          │        │          │
└──────────┘        └──────────┘        └──────────┘
```

II

111   111   111

```
              ┌────────────────────────┐
              │ 140                     │
              │                         │
              └────────────────────────┘
```

- - - - - - - - - - - - - - - - - - - - - - - - - - - - - - - - -

III

```
┌────────┐        ┌─────────────────────────┐
│ 320    │───────▶│ 240                      │
│        │        │                          │
└────────┘        └─────────────────────────┘

                     ┌──────────────────┐
                     │          200     │
                     │   ┌──────────┐   │
                     │   │ 210      │   │
                     │   └──────────┘   │
                     └──────────────────┘
```

300

Fig. 12

23

Europäisches
Patentamt

European
Patent Office

Office européen
des brevets

# EUROPEAN SEARCH REPORT

Application Number

EP 19 19 4633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THOMAS SCHMITZ ET AL: "Real Time Emulation of Parametric Guitar Tube Amplifier With Long Short Term Memory Neural Network", ARXIV.ORG, CORNELL UNIVERSITY LIBRARY, 201 OLIN LIBRARY CORNELL UNIVERSITY ITHACA, NY 14853, 19 April 2018 (2018-04-19), XP081226821, * the whole document * | 1-18 | INV.<br>G06N3/04<br>G06N3/08<br>G10H7/00<br>G10H1/02 |
| | ----- | | |
| | | | TECHNICAL FIELDS SEARCHED (IPC) |
| | | | G06N<br>G10H |

The present search report has been drawn up for all claims

| Place of search | Date of completion of the search | Examiner |
|---|---|---|
| The Hague | 21 February 2020 | Papadakis, Georgios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 786 850 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102015110938 A1

- US 2016328501 A1

### Non-patent literature cited in the description

- **E. DAMSKAGG ; L. JUVELA ; E. THUILLIER ; V. VALIMAKI.** Deep Learning for Tube Amplifier Emulation. *2019 IEEE International Conference on Acoustics, Speech and Signal Processing (ICASSP),* 2019, 471-475